# EUROPEAN PATENT APPLICATION

(11) **EP 4 675 235 A1**
(43) Date of publication of application: **07.01.2026**
(21) Application number: 23925370.1
(22) Date of filing: 02.11.2023
(51) Int. Cl.: G01D 11/24, H01M 50/216, H01M 50/244, H01M 50/284, H01M 50/293, H01M 50/512, H05K 5/06

(54) **SENSOR DEVICE**

(30) Priority: 28.02.2023 JP 2023030408
(71) Applicant: HOSIDEN CORPORATION, Yao-shi, Osaka 581-0071 (JP)
(72) Inventor: INOUE Ryo, Yao-shi, Osaka 581-0071 (JP); KONDO Hayato, Yao-shi, Osaka 581-0071 (JP); CHIN Shinu, Yao-shi, Osaka 581-0071 (JP); SATO Eiji, Yao-shi, Osaka 581-0071 (JP)
(74) Representative: LBP Lemcke, Brommer & Partner Patentanwälte mbB
(86) International application number: PCT/JP2023/039578
(87) International publication number: WO 2024/180816

(57) **Abstract**

A sensor device (D1) is attachable for use to a gauge (G1) and configured to obtain a measurement from the gauge (G1) contactlessly, the gauge (G1) including: a dial plate (G16) provided with a scale mark (G161); a needle (G14) rotatable over the dial plate (G16); and a shaft configured to rotate the needle (G14). The sensor device (D1) includes a body (M1) and a battery unit (B1). The body (M1) includes a body casing (1) containing a sensor circuit configured to obtain the measurement. The battery unit (B1) includes a battery casing (5) containing at least one battery cell configured to supply electric power to the sensor circuit. The body (M1) and the battery unit (B1) are configured to be assembled to each other as a result of the body casing (1) and the battery casing (5) being stacked on top of each other.

## Description

### Technical Field

The present invention relates to a sensor device attachable for use to a gauge and configured to obtain a measurement from the gauge contactlessly.

### Background Art

Factories are being automated and increasingly using robots and the like as assembly and inspection devices. Robot devices for automatic assembly and inspection are provided with a large number of gauges for monitoring the operation state. Such factories, which may use combustible gas, use devices that are required to meet explosion-proof specifications. A factory that uses a large number of gauges uses sensor devices for reading measurements from the gauges to save labor and requires a large number of power sources for the operation of the sensor devices. Using external power sources to supply electric power to gauge measurement sensor devices requires power cables for connection between the external power sources and the gauge measurement sensor devices in a number equal to the number of the gauge measurement sensor devices, and also requires such a large number of power cables to be provided for appropriately in the factory. The explosion-proof specifications mentioned above require an explosion-proof measure for the portions of the connection between the power cables and the gauge measurement sensor devices. This in turn requires use of power cables and connectors that meet special specifications, with the result of an increase in cost. Different techniques have been explored for solving this issue (see, for example, Patent Literature 1).

Patent Literature 1 discloses an explosion-proof field device including a battery containing structure and configured for use in a plant or factory to serve as a sensor for detecting the pressure difference or temperature. The explosion-proof device uses a capacitor to remain in the active state during replacement of battery packs, and may omit the capacitor if the explosion-proof device is capable of remaining active on its own during the replacement. Patent Literature 1, in other words, discloses an explosion-proof device configured to remain in the active state and allowing batteries to be replaced rapidly in an area in which a device is required to meet explosion-proof specifications.

### Citation List

### Patent Literature

Patent Literature 1: Japanese Unexamined Patent Application Publication, Tokukai, No. 2014-78414

### Summary of Invention

### Technical Problem

The explosion-proof device disclosed in Patent Literature 1 includes a battery containing structure including a first container section and a second container section each individually containing a battery. The battery containing structure also includes a swingable member configured to, in response to one of the two batteries being depressed, swing to eject the other battery. The swingable member has an accordingly complex structure, with the result of an increase in cost. While, for instance, a worker needs to replace the batteries rapidly in an area in which a device is required to meet explosion-proof specifications, the swingable member only allows the worker to replace one of the two batteries at a time. Further, including the swingable member means a larger sensor. In addition, if the explosion-proof device includes two or more battery packs, the swingable member will be more complex, with the result of an increase in cost and a larger device, and not allow a worker to replace two or more battery packs simultaneously and rapidly.

The above circumstances have led to a demand for a sensor device that allows batteries to be replaced rapidly without the need for a complex mechanism in an area in which a device is required to meet explosion-proof specifications.

### Solution to Problem

A sensor device according to the present invention is characteristically a sensor device attachable for use to a gauge and configured to obtain a measurement from the gauge contactlessly, the gauge including: a dial plate provided with a scale mark; a needle rotatable over the dial plate; and a shaft configured to rotate the needle, the sensor device including: a body; and a battery unit, the body including a body casing containing a sensor circuit configured to obtain the measurement, the battery unit including a battery casing containing at least one battery cell configured to supply electric power to the sensor circuit, the body and the battery unit being configured to be assembled to each other as a result of the body casing and the battery casing being stacked on top of each other.

With the above characteristic configuration, stacking the body casing and the battery casing on top of each other with the body attached to the gauge easily assembles the body and the battery unit to each other. Detaching the battery casing from the body casing with the body attached to the gauge separates the body and the battery unit from each other. The sensor device, if meeting explosion-proof specifications, is usable in an explosion-proof area. If the body and the battery unit each independently meet explosion-proof specifications, the user is allowed to replace the battery unit together with the at least one battery cell in an area that requires explosion-proof specifications of an apparatus for which the sensor device is used; the user has no need to take the sensor device out of that area. This allows a battery cell to be replaced rapidly in an area in which a device is required to meet explosion-proof specifications.

The sensor device may preferably be further configured such that the body faces the gauge with the sensor device attached to the gauge.

With the above configuration, if the body includes a bottom, the sensor circuit is separated from the gauge by only the bottom when the sensor circuit obtains a measurement from the gauge. This allows the sensor circuit to be near the gauge and thereby obtain a measurement accurately.

The sensor device may preferably further include: a sealer at a boundary between the body casing and the battery casing.

The above configuration renders the respective internal spaces of the body casing and the battery casing structurally dust-tight and water-proof. This prevents the sensor circuit, which is in the body casing, and the at least one battery cell, which is in the battery casing, from having a function limited due to adherence of water droplets, dust, or the like.

The sensor device may preferably be further configured such that the at least one battery cell includes a plurality of battery cells, and the sensor device further includes: a holder holding the plurality of battery cells and including a separator section that is made of an insulating material and that is disposed between two mutually adjacent battery cells among the plurality of battery cells in the battery casing; and a battery substrate contained in the battery casing together with the holder and electrically connected to the plurality of battery cells.

With the above configuration, the holder holds the battery cells in position in the battery casing.

The sensor device may preferably be further configured such that the plurality of battery cells are coin-type battery cells stacked on top of each other such that two mutually adjacent battery cells among the plurality of battery cells have either respective positive electrodes facing each other or respective negative electrodes facing each other.

The above configuration reduces the electric potential difference between mutually facing electrodes of battery cells connected in parallel and thereby prevents the risk of electric discharge between mutually facing electrodes.

The sensor device may preferably be further configured such that the plurality of battery cells each have an axis parallel to an axis of the shaft, the battery substrate has a face extending in a direction in which the plurality of battery cells are stacked on top of each other, and the plurality of battery cells are electrically connected to the battery substrate through extension terminals extending from the positive electrode and negative electrode of each of the plurality of battery cells.

The above configuration allows the battery cells to be arranged such that their combined axial dimension is at its minimum and be electrically connected to a single battery substrate easily.

The sensor device may preferably be further configured such that the battery casing includes: a barrel-shaped container containing the plurality of battery cells; and a substrate container protruding radially outward from the barrel-shaped container and containing the battery substrate, and with the sensor device attached to the gauge, the body casing has an outer shape identical to an outer shape of the battery casing as viewed along an axis of the shaft.

With the above configuration, the battery casing includes a barrel-shaped container containing the battery cells and having a size minimally required to contain the holder and a substrate container having a size minimally required to contain the battery substrate and a portion of the holder. This allows the sensor device as attached to the gauge to have a minimum axial area.

The sensor device may preferably be further configured such that the body and the battery unit are attachable to and detachable from each other as a result of pressing the battery casing against the body casing in a press direction, holding the battery casing as pressed, and rotating the battery casing about a rotation axis parallel to the press direction.

With the above configuration, for instance, rotating the battery casing as attached to the body casing counterclockwise by a predetermined angle detaches the battery casing from the body casing. Rotating the battery casing as detached from the body casing clockwise by a predetermined angle assembles the battery casing to the body casing. The attachment involves no fixing member such as a screw. The above configuration allows the body casing and the battery casing to be easily attached to and detached from each other, and allows a battery cell to be replaced in a simple manner and thus within a short time.

The sensor device may preferably be further configured such that the sensor circuit includes: a sensor section configured to obtain positional information indicative of a position of the needle; and a sensor controller, and with the sensor device attached to the gauge, the sensor section faces a bottom of the body casing and coincides with the shaft as viewed along an axis of the shaft.

With the above configuration, if, for instance, the gauge includes a magnet rotatable together with the needle, the sensor section detects a change caused in the magnetic field by the rotation of the magnet, whereas the sensor controller converts the output of the sensor section into positional information indicative of the position of the needle. This allows the sensor device to detect the position of the needle.

The sensor device may preferably further include: a wireless circuit including an antenna configured to transmit the positional information to a receiver, wherein with the sensor device attached to the gauge, the antenna does not coincide with the shaft as viewed along the axis of the shaft.

The above configuration allows positional information that the sensor section has obtained to be transmitted wirelessly through the antenna to a receiver away from the gauge, allowing a person to check the detection result from the gauge in a place away from the gauge. For instance, providing two or more gauges for equipment in a factory to measure pressure at different positions eliminates the need for an inspector to visually check all pressure gauges as an inspection at the start of the factory to learn whether the equipment is in operation at normal pressure.

### Brief Description of Drawings

Fig. 1 is a perspective view of a sensor device as attached to a gauge.
Fig. 2 is a cross-sectional view of a sensor device.
Fig. 3 is a perspective view of a body and a battery unit with the battery unit detached from the body.
Fig. 4 is a perspective view of a body and a battery unit with the battery unit detached from the body.
Fig. 5 is an exploded perspective view of a body.
Fig. 6 is an exploded perspective view of a body.
Fig. 7 is an exploded perspective view of a battery unit.
Fig. 8 is an exploded perspective view of a battery unit.
Fig. 9 is a diagram illustrating how an internal holder is connected to a battery substrate.
Fig. 10 is a diagram illustrating a body and a battery unit in an active state and an inactive state.

### Description of Embodiments

The description below deals with a sensor device according to the present invention. The embodiments described below include different elements combinable with one another as long as such combination causes no disadvantage. The description below of the embodiments discusses merely example elements in terms of such aspects as material, shape, dimension, number, and arrangement. The elements may each be designed variously as long as the element performs its intended function.

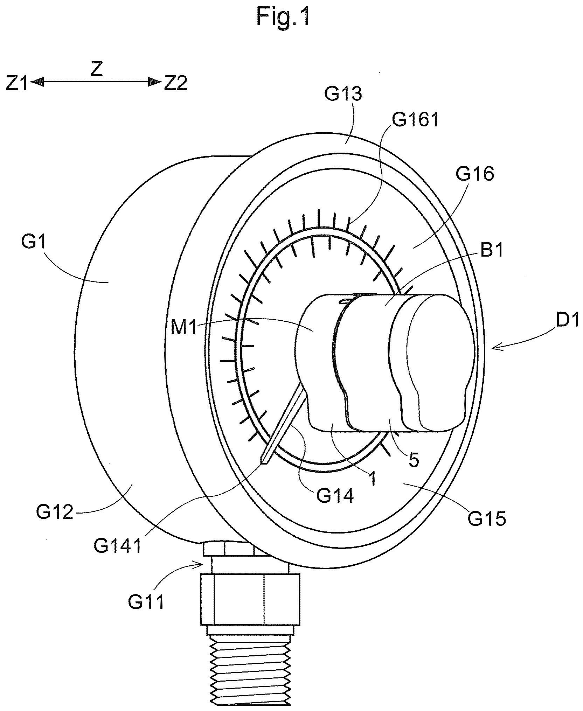

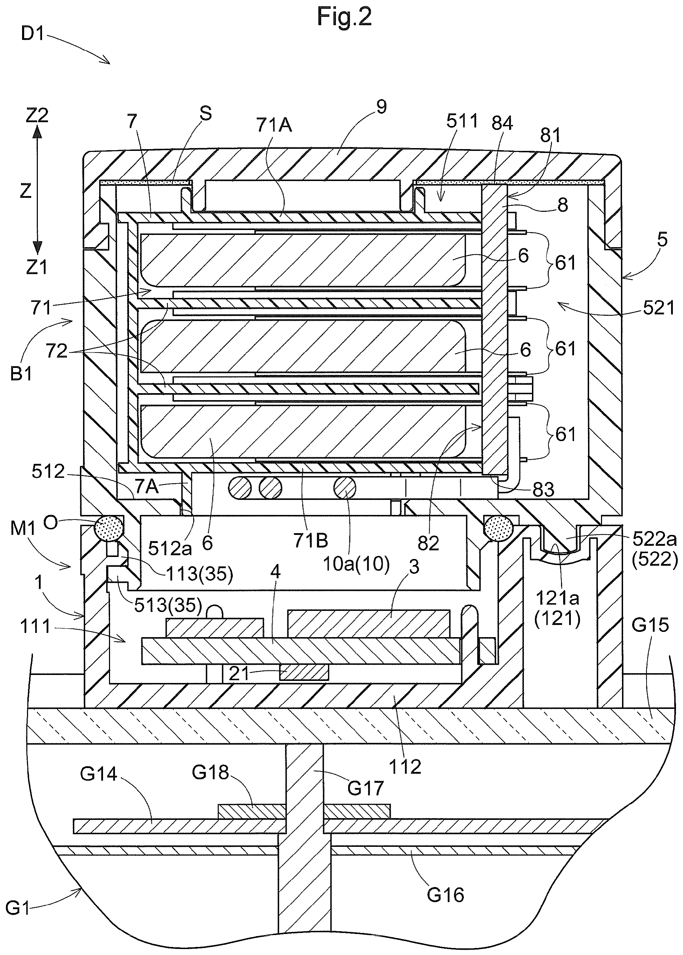

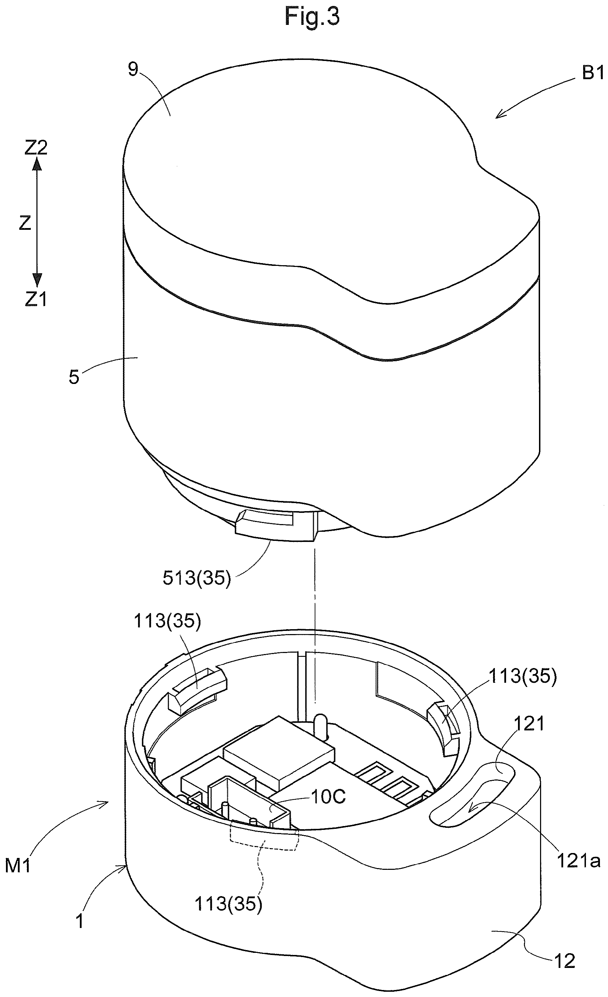

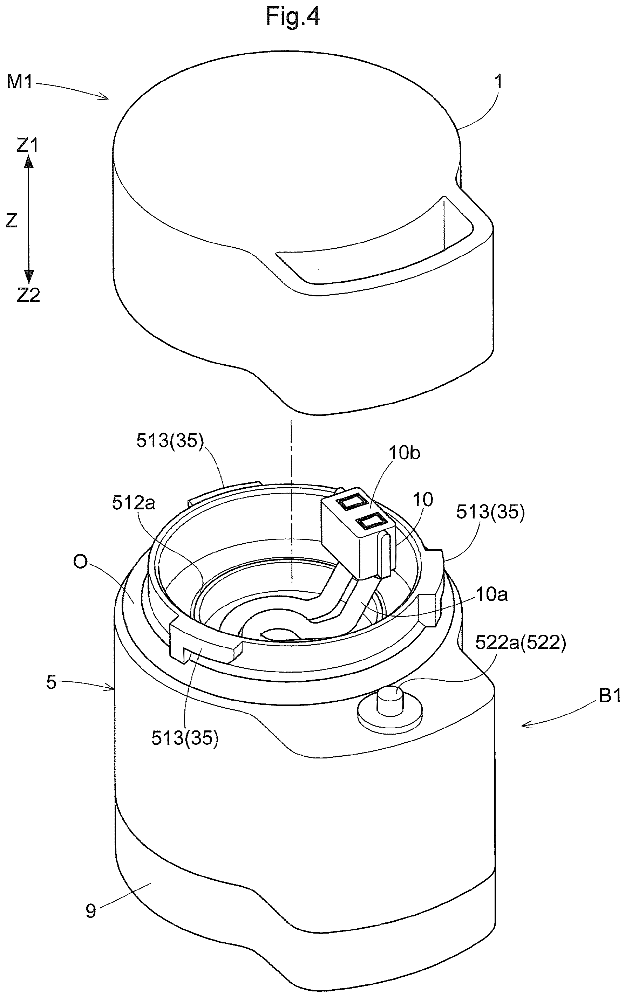

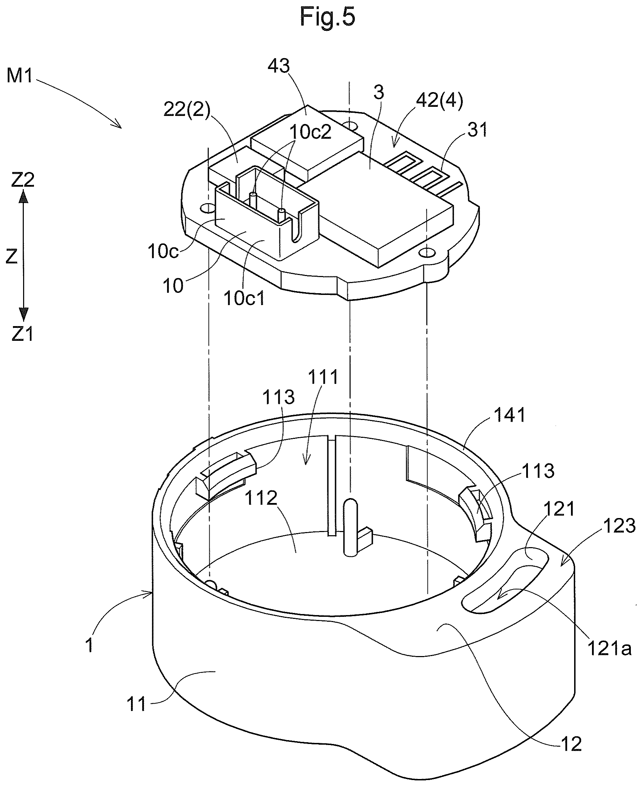

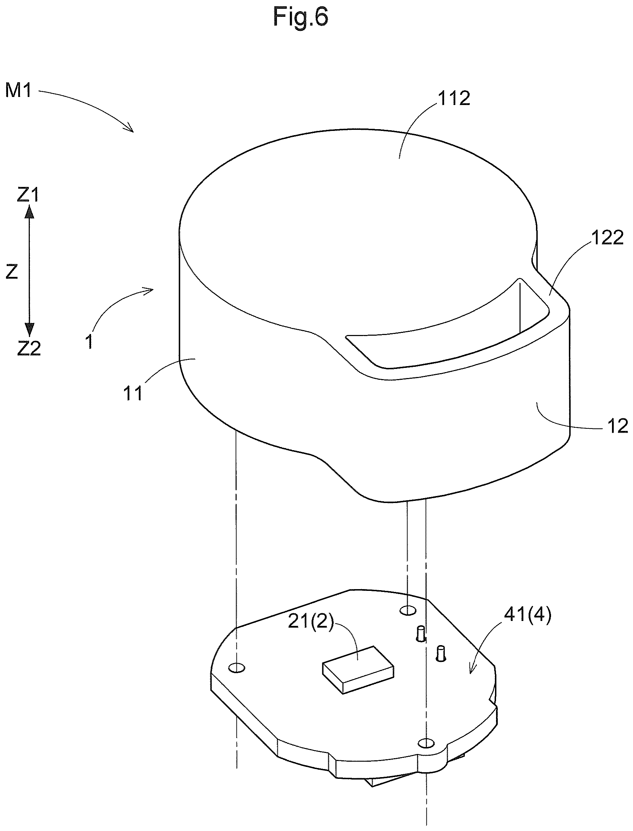

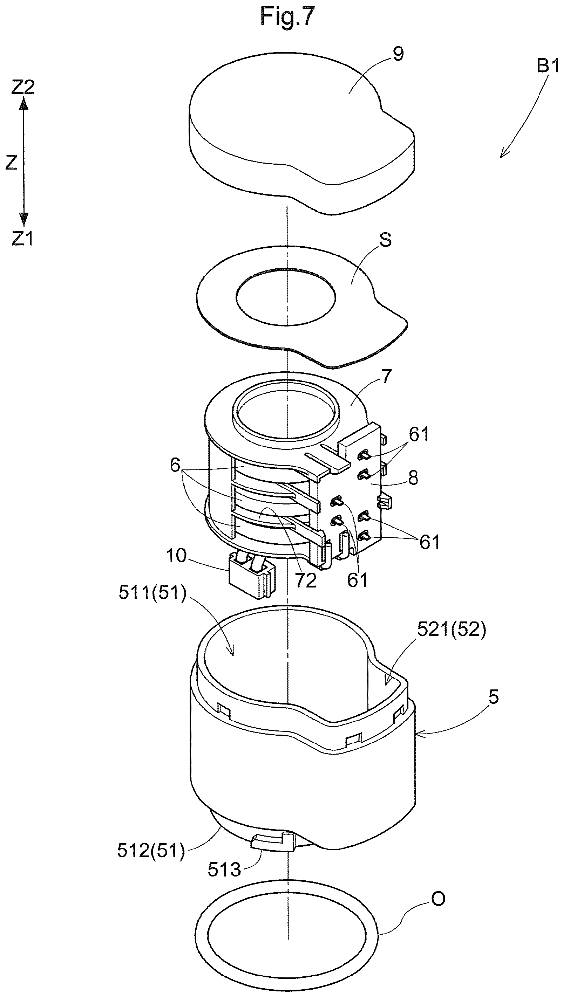

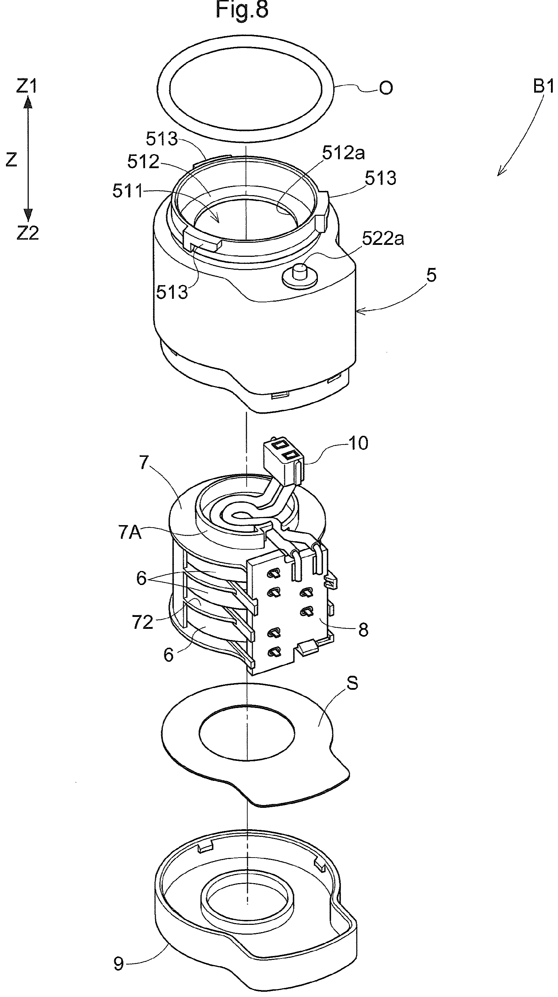

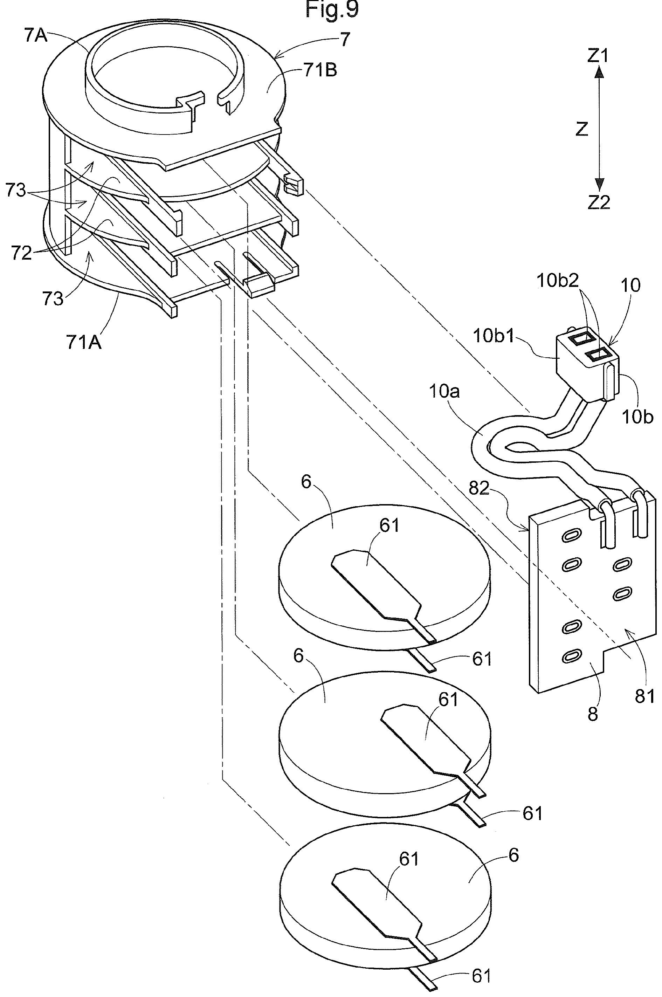

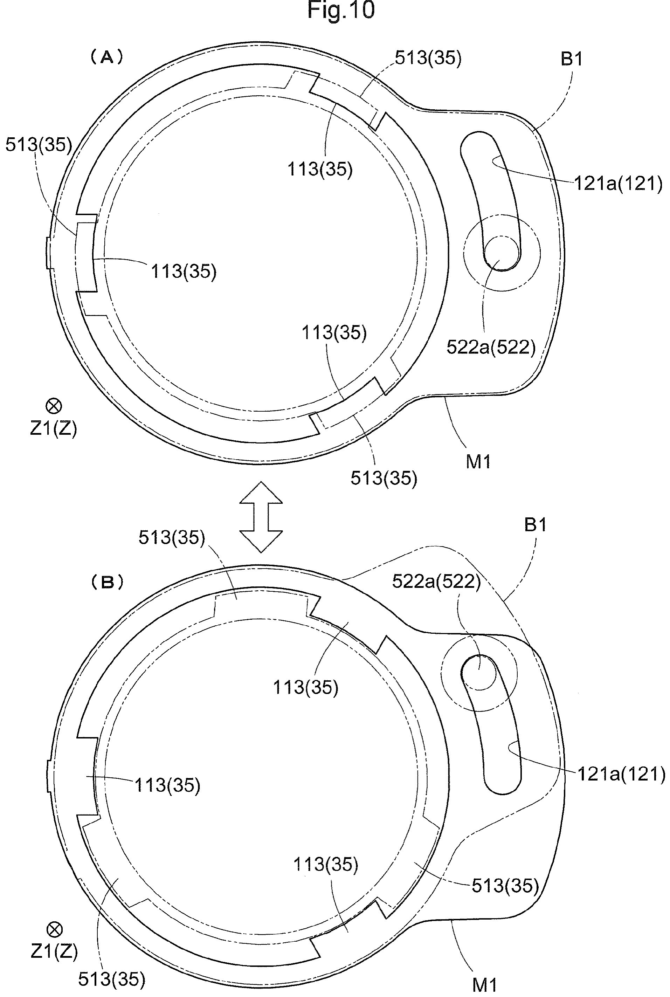

The description below deals with an example sensor device D1 with reference to Figs. 1 to 10. Fig. 1 is a perspective view of the sensor device D1 as attached to a gauge G1. Fig. 2 is a cross-sectional view of the sensor device D1. Figs. 3 and 4 are each a perspective view of a body M1 and a battery unit B1 with the battery unit B1 detached from the body M1. Figs. 5 and 6 are each an exploded perspective view of the body M1. Figs. 7 and 8 are each an exploded perspective view of the battery unit B1. Fig. 9 is a diagram illustrating how an internal holder 7 is connected to a battery substrate 8. Fig. 10 is a diagram illustrating the body M1 and the battery unit B1 in an active state and an inactive state. Figs. 1 to 9 each show an axis Z. The description below uses the term "direction Z1" or "first axial direction Z1" to refer to one direction along the axis and the term "direction Z2" or "second axial direction Z2" to refer to the other direction along the axis. The axis Z corresponds to the axis of a shaft G17 (described later) of the gauge G1 as illustrated in Fig. 2 and to that axis of the sensor device D1 as attached to the gauge G1 which extends along the axis of the shaft G17 (that is, along which the body M1 and the battery unit B1 are stacked).

As illustrated in Figs. 1 and 2, the sensor device D1 is attachable to a separate gauge G1 including a needle G14, a dial plate G16, and a shaft G17. The dial plate G16 has a face provided with scale marks G161 that are, for the present embodiment, arranged circumferentially in a radially outward area of the dial plate G16. The shaft G17 extends through the dial plate G16 along the axis Z, and is configured to rotate the needle G14 over the dial plate G16. The needle G14 has a tip G141 configured to coincide with a scale mark G161 to indicate a measurement provided by the gauge G1.

The sensor device D1 obtains a measurement contactlessly from a gauge G1 to which the sensor device D1 is attached, the measurement being the result of measurement by the gauge G1. As illustrated in Figs. 1 to 4, the sensor device D1 includes a body M1 and a battery unit B1.

The sensor device D1 is attached to the gauge G1 in such an orientation that the body M1 faces the gauge G1, that is, with the body M1 between the battery unit B1 and the gauge G1 as illustrated in Figs. 1 and 2.

The description below deals with the body M1. As illustrated in Figs. 2 to 6, the body M1 includes a body casing 1.

The body casing 1 includes a barrel 11 in the form of a bottomed barrel (or substantial barrel) and a protrusion 12 protruding radially outward from the outer surface of the barrel 11.

The barrel 11 has a body container space 111 inside, and includes a bottom 112 in the first axial direction Z1 from the body container space 111.

The protrusion 12 may have in the first axial direction Z1 an end 122 flush with the bottom 112, which is the end of the barrel 11 in the first axial direction Z1. The protrusion 12 may have in the second axial direction Z2 an end 123 flush with that end 141 of the barrel 11 which is in the second axial direction Z2. The protrusion 12 may have any shape as viewed along the axis Z (that is, in a plan view) or any cross-sectional shape taken orthogonally to the axis Z. Examples include a rectangle (or substantial rectangle) and a trapezoid (or substantial trapezoid). The body casing 1 may omit the protrusion 12.

The sensor device D1 includes a sensor circuit 2 and a wireless circuit 3 in the body container space 111.

The sensor circuit 2 obtains a measurement from the gauge G1, and includes a sensor section 21 and a sensor controller 22. The sensor section 21 faces the bottom 112 of the body casing 1, and obtains positional information indicative of the position of the needle G14.

The description below deals with a specific example of the body M1 of the sensor device D1. The sensor section 21 of the sensor circuit 2 may be in the form of a magnetic sensor integrated circuit (IC), for example. The body M1, as illustrated in Figs. 5 and 6, includes a body substrate 4 having a first face 41 in the first axial direction Z1 and a second face 42 in the second axial direction Z2. The first face 41 is provided with the sensor section 21, whereas the second face 42 is provided with the sensor controller 22 and the wireless circuit 3. With the sensor device D1 attached to the gauge G1, the sensor section 21 coincides with the shaft G17 as viewed along the axis Z. The wireless circuit 3 includes on the second face 42 an antenna 31 in the form of a pattern as illustrated in Fig. 5 and configured to transmit to a receiver (not illustrated in the drawings) the positional information that the sensor section 21 has obtained.

With the sensor device D1 attached to the gauge G1, the antenna 31 does not coincide with the shaft G17 as viewed along the axis Z; in other words, the antenna 31 does not coincide with the shaft G17 when the sensor device D1 is viewed along the axis of the shaft G17.

This means that the antenna 31 does not coincide with the sensor section 21 as viewed along the axis Z.

The body substrate 4 may be rigid or flexible. The body substrate 4 may be a double-sided substrate (that is, a two-layer substrate) including two layers, namely the first face 41 and the second face 42 (specifically, a pattern on the first face 41 and a pattern on the second face 42). The body substrate 4 may be a multilayer substrate including three or more layers including the first face 41, the second face 42, and an inner layer therebetween. The body substrate 4 may be fixed to and supported by the body casing 1.

The body M1 may meet explosion-proof specifications, meaning that the sensor device D1 may be designed to avoid igniting an external combustible (such as gas and dust). The body M1 may meet such explosion-proof specifications through a measure of, for example, (i) separating mutually adjacent components for a larger insulation distance in a space with an electric potential difference or on a component surface with an electric potential difference, (ii) applying a resin material such as a potting agent to a target component, or (iii) overmolding the body M1 to seal the internal space of the body M1 (that is, of the body casing 1) with a resin material.

The description below deals with the battery unit B1, which includes, as illustrated in Figs. 7 and 8, a battery casing 5, battery cells 6, an internal holder 7 (which is an example "holder"), and a battery substrate 8.

The battery casing 5 includes a barrel-shaped container 51 in the form of a bottomed barrel (or substantial barrel) and a substrate container 52 protruding radially outward from the barrel-shaped container 51.

The barrel-shaped container 51 has an internal holder containing space 511 inside, and includes a bottom 512 in the first axial direction Z1. The barrel-shaped container 51 contains the battery cells 6 and the internal holder 7 in the internal holder containing space 511. The battery cells 6 supply electric power to the sensor circuit 2. The bottom 512 has at a radially central portion a through hole 512a through which the internal holder containing space 511 is connected to the outside.

The substrate container 52 has a battery substrate containing space 521 containing the battery substrate 8 and communicating with the internal holder containing space 511.

The internal holder containing space 511 for the present embodiment contains the battery cells 6 as well as a portion of the internal holder 7. The battery substrate containing space 521 contains the battery substrate 8 as well as a portion of the internal holder 7.

The internal holder containing space 511 for the present embodiment contains three battery cells 6 in the form of coin-type cells arranged along the axis of each battery cell 6. The battery cells 6 for the present embodiment are arranged along the axis Z.

The battery cells 6 are arranged such that two mutually adjacent ones have either respective positive electrodes facing each other or respective negative electrodes facing each other. The battery cells 6 for the present embodiment each include a positive electrode and a negative electrode each provided with an electrically conductive tab (which is an example "extension terminal") 61 with a first end welded to the corresponding electrode and a second end extending from the corresponding electrode radially outward of the battery cell 6 and soldered or otherwise electrically connected to the battery substrate 8. This means that the battery cells 6 are electrically connected to the battery substrate 8 through the tabs 61. The battery cells 6 may be connected to the battery substrate 8 by something electrically conductive other than the tabs 61 that electrically connects the battery cells 6 to the battery substrate 8.

The internal holder 7 is in the form of a cylinder made of an insulating material, and includes a battery container 71 containing the battery cells 6 as illustrated in Fig. 2. The battery container 71 for the present embodiment contains three battery cells 6 separately. Specifically, the internal holder 7 includes separator sections 72 each made of an insulating material and disposed between two mutually adjacent battery cells 6 in the battery casing 5. This means that the present embodiment, as illustrated in Fig. 2, includes the top plate 71A of the internal holder 7, a tab 61, a battery cell 6, a tab 61, a separator section 72, a tab 61, a battery cell 6, a tab 61, a separator section 72, a tab 61, a battery cell 6, a tab 61, and the bottom plate 71B of the internal holder 7 in this order along the axis Z. The internal holder 7 is, as illustrated in Fig. 9, open at a circumferential portion for the battery cells 6 to be inserted into the battery container 71, the portion being a battery insertion section 73.

As illustrated in Fig. 2, the battery substrate 8 has a first face 81 and a second face 82. The battery substrate 8 for the present embodiment has faces (namely, the first face 81 and the second face 82) each extending in the direction in which the battery cells 6 are stacked, that is, along the axis Z, as mentioned above. This means that the battery substrate 8 has faces parallel to the axis Z. The second face 82 faces the battery cells 6, whereas the first face 81 is opposite to the second face 82. The battery substrate 8 has a first end 83 in the first axial direction Z1 and a second end 84 in the second axial direction Z2.

The battery substrate 8 covers at least a portion of the battery insertion section 73, which is included in the internal holder 7 containing the battery cells 6. The first end 83 is in contact with the bottom face of the battery casing 5. The second end 84 holds a lid 9 for the battery casing 5 with a sheet S in-between.

As mentioned above, the battery cells 6 are arranged such that two mutually adjacent ones have either respective positive electrodes facing each other or respective negative electrodes facing each other. The battery cells 6 are electrically connected to one another in parallel through a pattern on the battery substrate 8. The battery substrate 8 may be provided with a controller for controlling the output of the battery cells 6. As illustrated in Fig. 9, the battery substrate 8 is provided with a connection member 10 with a first end soldered or otherwise electrically connected to the battery substrate 8.

The present embodiment includes three battery cells 6. The battery unit B1 may include one or two battery cells 6 or four or more battery cells 6. With the battery unit B1 including two or more battery cells 6, they may be electrically connected to one another in series, in parallel, or both. The battery cells 6 are described above as arranged such that two mutually adjacent ones have either respective positive electrodes facing each other or respective negative electrodes facing each other. If, for instance, the battery cells 6 are connected in series, or if they are connected in parallel such that two mutually facing battery cells 6 have respective positive or negative electrodes with respective electric potentials different from each other, the mutually facing battery cells 6 may be separated from each other by a separator section 72 that coincides with each battery cell 6 in its entirety as viewed along the axis Z.

The battery unit B1 includes a lid 9 mentioned above in the second axial direction Z2 and an optional sheet S between the internal holder 7 and the lid 9 as illustrated in Fig. 8.

The internal holder 7 includes a barrel 7A disposed in the first axial direction Z1, contained in the internal holder containing space 511, and extending through the through hole 512a in the bottom 512. The lid 9 closes that end of the battery casing 5 which is in the second axial direction Z2, and is fixed to and held by the battery casing 5. The internal holder 7 may have a portion in the first axial direction Z1 which portion is outside the through hole 512a in the first axial direction Z1.

The internal holder 7 may be made of an insulating material and molded for a structure that electrically connects the battery cells 6 to the battery substrate 8 or may be molded for the battery cells 6. The internal holder 7 may be formed by any method such as injection molding, transfer molding, or potting, which involves injecting a thermosetting resin or a UV curing resin into a mold and curing the resin. The internal holder 7 is not necessarily in the form of a cylinder and may be in any shape that allows the internal holder 7 to be held in the internal holder containing space 511.

As illustrated in Fig. 2, the battery unit B1 is attachable to the body M1 as the battery casing 5 is stacked on the body casing 1 with an O ring (which is an example "sealer") O disposed at the boundary between the battery casing 5 and the body casing 1 and attached to the battery casing 5. This renders the body container space 111 liquid-tight with the battery unit B1 fixed to the body M1. The sheet S is held by and between the battery casing 5 and the lid 9 to function together with the O ring O to render the internal holder containing space 511 and the battery substrate containing space 521 liquid-tight. The O ring O may be attached to the body casing 1. The sheet S may be replaced with a packing such as an O ring or may be formed by applying a caulking agent. The packing may be integral with the battery casing 5 or the lid 9. The sensor device D1 may include a lid 9 ultrasonically welded, bonded, or otherwise fixed to the battery casing 5 to prevent water droplets from entering the sensor device D1 through a portion at which the lid 9 is fitted with the battery casing 5.

The battery unit B1 may, like the body M1, meet explosion-proof specifications. The battery unit B1 may, like the body M1, meet such explosion-proof specifications through a preferable measure of, for example, (i) separating mutually adjacent components for a larger insulation distance in a space with an electric potential difference or on a component surface with an electric potential difference, (ii) applying a resin material such as a potting agent to a target component, or (iii) overmolding the body M1 to seal the internal space of the body M1 (that is, of the body casing 1) with a resin material.

The sensor device D1, which combines the body M1 with the battery unit B1, may meet explosion-proof specifications.

The connection member 10 electrically connects the body M1 to the battery unit B1. As illustrated in Figs. 5 and 9, the connection member 10 may include (i) a harness for substrate-to-substrate connection which harness includes electric wires 10a and a plug 10b and (ii) a receptacle 10c mountable on the body substrate 4. The electric wires 10a are, for example, a set of a power source electric wire and a ground electric wire. The electric wires 10a, as described above, each have a first end soldered or otherwise electrically connected to the battery substrate 8 and a second end connected to the plug 10b, which is for the power source electric wire and the ground electric wire. The plug 10b includes a plug body 10b1 and plug contacts 10b2 held by the plug body 10b1, and is electrically connected to the respective center conductors of the electric wires 10a. As illustrated in Fig. 4, a portion of each electric wire 10a and the plug 10b are outside the through hole 512a in the battery casing 5 in the first axial direction Z1. As illustrated in Fig. 5, the receptacle 10c is mounted on the substrate 4 and electrically connected to a pattern on the body substrate 4. The receptacle 10c includes a receptacle body 10c1 and receptacle terminals 10c2 held by the receptacle body 10c1. Fitting the plug body 10b1 in the receptacle body 10c1 electrically connects the plug contacts 10b2 to the respective receptacle terminals 10c2 to electrically connect the body substrate 4 to the battery substrate 8.

The battery unit B1 is attachable to the body M1 as the battery casing 5 is stacked on the body casing 1. The sensor device D1 may be in an active state, in which the sensor device D1 is capable of performing its sensor function, or an inactive state, in which the sensor device D1 is incapable of performing its sensor function. The body casing 1 as attached to the gauge G1 has an outer shape identical to that of the battery casing 5 as viewed along the axis Z, that is, the axis of the shaft G17.

The battery unit B1 is attachable to and detachable from the body M1 as a result of pressing the battery casing 5 against the body casing 1, keeping the press, and rotating the battery casing 5 about a rotation axis parallel to the press direction. Specifically, while pressing the battery casing 5 against the body casing 1, the user rotates the battery casing 5 clockwise about the axis of the barrel-shaped container 51 of the battery casing 5 so that as illustrated in (A) of Fig. 10, the battery casing 5 coincides with the body casing 1 as viewed in the first axial direction Z1 along the axis Z. This attaches the battery casing 5 to the body casing 1 and sets the sensor device D1 in the active state. The user rotates the battery casing 5 counterclockwise about the axis of the barrel-shaped container 51 so that as illustrated in (B) of Fig. 10, the battery casing 5 does not coincide with the body casing 1 as viewed along the axis Z. This detaches the battery casing 5 from the body casing 1 and sets the sensor device D1 in the inactive state.

The battery unit B1 may be attachable to and detachable from the body M1 as above preferably with use of lock mechanisms 35 provided for the battery casing 5 and the body casing 1. As illustrated in Figs. 3 and 4, the lock mechanisms 35 include, for example, locking sections 513 disposed on the inner surface of the body casing 1 and protruding radially inward and lock sections 113 protruding from the battery casing 5 in the first axial direction Z1. The lock sections 113 are each open at the clockwise end and closed at the counterclockwise end as viewed in the first axial direction Z1. With this configuration, pressing the battery casing 5 against the body casing 1 while the battery casing 5 does not coincide with the body casing 1 and rotating the battery casing 5 clockwise causes the locking sections 513 to enter the respective lock sections 113 and be locked in the respective lock sections 113. This attaches the battery unit B1 to the body M1. While the locking sections 513 are locked in the respective lock sections 113, rotating the battery casing 5 counterclockwise relative to the body casing 1 (for example, by 25 degrees) detaches the battery unit B1 from the body M1.

As described above, the battery unit B1 is attached to the body M1 with the body M1 between the battery unit B1 and the gauge G1. As described above, rotating the battery casing 5 clockwise relative to the body casing 1 attaches the battery unit B1 to the body M1, whereas rotating the battery casing 5 counterclockwise relative to the body casing 1 detaches the battery unit B1 from the body M1. This allows the battery unit B1 to be detached for replacement with the body M1 remaining attached to the gauge G1.

The user detaches the battery unit B1 from the body M1 completely by pulling the plug 10b out of the receptacle 10c. To attach the battery unit B1 to the body M1, the user may preferably insert the plug 10b into the receptacle 10c for connection before pressing the battery unit B1 against the body M1 in the first axial direction Z1. The sensor device D1 may be configured such that rotating the battery unit B1 counterclockwise attaches the battery unit B1 to the body M1 and clockwise detaches the battery unit B1 from the body M1. The detachment may require rotating the battery casing 5 by over or under 25 degrees.

The barrel 11 of the body casing 1 may or may not be coaxial with the barrel-shaped container 51 of the battery casing 5.

As illustrated in Figs. 3 and 4, the protrusion 12 of the body casing 1 has a guide groove 121 open in the second axial direction Z2. The substrate container 52 of the battery casing 5 includes a projection 522 protruding in the first axial direction Z1. The projection 522 may preferably be in the guide groove 121 when the sensor device D1 is in the active state illustrated in (A) of Fig. 10 and in the inactive state illustrated in (B) of Fig. 10. The guide groove 121 has a bottom face 121a facing in the second axial direction Z2. The projection 522 includes a tip 522a in the first axial direction Z1. The tip 522a may preferably be in contact with the bottom face 121a with the battery casing 5 pressed against the body casing 1 as described above while the sensor device D1 is transitioning from the active state to the inactive state or vice versa. The tip 522a may be apart from the bottom face 121a.

As illustrated in Figs. 1 and 2, the gauge G1 includes a body G11, a casing G12, an outer frame G13, a needle G14, a transparent plate G15, a dial plate G16, and a shaft G17. The body G11 is contained in the casing G12 together with the dial plate G16, and is attached to the transparent plate G15. The transparent plate G15 is fitted in the outer frame G13 and incorporated in the casing G12, so that the transparent plate G15 is held inside the outer frame G13. The needle G14 is configured to coincide with a scale mark G161 for the gauge G1 to function as a pressure gauge that provides a measurement. The sensor device D1 may be configured such that the barrel 11 of the body casing 1 has an axis that coincides with the central axis of the pressure gauge about which the needle G14 rotates as viewed along the axis Z and that with the body M1 attached to the gauge G1, the sensor section 21 of the sensor circuit 2 coincides with the shaft G17 as the above central axis as viewed along the axis Z

### [Alternative Embodiments]

The description above deals with a sensor device D1 that includes a connection member 10 including electric wires 10a, a receptacle 10c, and a plug 10b. The sensor device D1 may, instead of including such a connection member 10, be configured, for instance, such that the body M1 and the battery unit B1 include respective connectors configured to elastically come into contact with each other for electric connection between the body M1 and the battery unit B1.

The body substrate 4 may include a body power source controller 43 configured to control how the body M1 is supplied with electric power. The battery substrate 8 may include a controller (not illustrated in the drawings) configured to control the output of the battery unit B1. Specifically, the body power source controller 43 may preferably control electric power from the battery unit B1 to drive the sensor circuit 2 and the wireless circuit 3. The controller may preferably control electric power from the battery cells 6 which electric power is outputted from the battery substrate 8 through the connection member 10.

The battery unit B1 may be configured to (i) supply electric power from the battery cells 6 through the connection member 10 to the body M1 when the sensor device D1 is in the active state illustrated in (A) of Fig. 10 and (ii) supply no electric power from the battery cells 6 when the sensor device D1 is in the inactive state illustrated in (B) of Fig. 10 or when the battery unit B1 is detached from the body M1 so that no electric potential difference is at that output end of the connection member 10 which is connected to the battery unit B1. This configuration may preferably be achieved by, for example, a magnet provided for the body M1 and a Hall device (which is an example controller) provided for the battery unit B1. Such a sensor device D1 may preferably be configured such that in the active state, the Hall device detects a magnetic flux of the magnet to cause the battery cells 6 to output electric power and that in the inactive state or with the battery unit B1 detached from the body M1, the Hall device fails to detect a magnetic flux of the magnet to cause the battery cells 6 to output no electric power. The sensor device D1 may be configured such that the body M1 includes as a portion of the connection member 10 a body terminal made of an electrically conductive material and that the battery unit B1 includes as a portion of the connection member 10 a battery terminal made of an electrically conductive material and including an elastically displaceable contact. Such a sensor device D1 may be configured such that in the active state, the contact is displaced to come into elastic contact with the body terminal for electric connection and that in the inactive state or during transition between the active and inactive states, the contact is not in contact with the body terminal for no electric connection.

The sensor device D1 may be configured such that the body M1 includes as a portion of the connection member 10 a body terminal made of an electrically conductive material and that the battery unit B1 includes as a portion of the connection member 10 a battery terminal made of an electrically conductive material and including an elastically displaceable contact. Such a sensor device D1 is configured such that in the active and inactive states, the contact is displaced to come into elastic contact with the body terminal for electric connection. With a magnet provided for the body M1 and a Hall device provided for the battery unit B1, the sensor device D1 may be configured such that in the active state, the Hall device detects a magnetic flux of the magnet to cause the battery cells 6 to output electric power and that in the inactive state or with the battery unit B1 detached from the body M1, the Hall device fails to detect a magnetic flux of the magnet to cause the battery cells 6 to output no electric power. The body M1 and the battery unit B1 may become electrically connected to each other at a time point different from the time point at which the battery cells 6 start to output electric power.

The body casing 1, the battery casing 5, and the lid 9 may each be made of a transparent insulating material, for example.

The barrel 11 of the body casing 1 and the barrel-shaped container 51 of the battery casing 5 may each include a display that allows the user to visually recognize whether the sensor device D1 is in the active state or the inactive state.

The sensor device D1 as the embodiment described above is attached to a pressure gauge as an example of the gauge G1. The gauge G1 is, however, not necessarily a pressure gauge and may be, for example, a voltmeter, an ammeter, an electric power meter, or a watt-hour meter as well as a flowmeter.

### [Technical Features and Effects]

The sensor device D1, which is configured as above and attachable for use to a gauge G1, has technical features and effects described below.

### (1) First Technical Feature and Effects

Attaching the battery casing 5 to the body casing 1 with the body casing 1 attached to the gauge G1 electrically connects the battery unit B1 to the body M1. Detaching the battery casing 5 from the body casing 1 with the body casing 1 attached to the gauge G1 electrically disconnects the battery unit B1 from the body M1. The sensor device D1, if meeting explosion-proof specifications, is usable in an explosion-proof area. If the body M1 and the battery unit B1 each independently meet explosion-proof specifications, the user is allowed to replace the battery unit B1 together with the battery cells 6 in an area that requires explosion-proof specifications of an apparatus for which the sensor device D1 is used; the user has no need to take the sensor device D1 out of that area.

Preparing a battery unit B1 with new battery cells 6 in the battery casing 5 in advance allows the old battery casing 5 itself to be replaced for replacement of the old battery cells 6 with the body M1 remaining attached to the gauge G1. This configuration eliminates the need to pull the old battery cells 6 out of the battery casing 5, insert new battery cells 6 into the internal holder 7, and open and close the lid 9 of the battery casing 5 for the above operations for replacement of battery cells. This in turn allows the battery cells to be replaced rapidly, reducing the time period necessary to replace the battery unit B1. The body power source controller 43 of the body M1 may have the function of continuing to supply electric power to the sensor circuit 2 and the wireless circuit 3 during the replacement. This prevents the sensor device D1 from stopping detecting a measurement from the gauge G1 due to the replacement of the battery unit B1.

If the sensor device D1 produces detection data for use to control the power source of equipment in a factory, the battery cells are replaceable without a stop of the equipment. If, for instance, the sensor device D1 is programmed to, at the start of its operation, adjust its function of detecting a measurement provided by the gauge G1, the sensor device D1 does not stop the function during replacement of battery cells. This eliminates the need for the adjustment and hence for the time period otherwise necessary for the adjustment. The above configuration eliminates the need for the time period otherwise necessary to, if a battery cell 6 is connected incorrectly such that the positive and negative electrodes are reversed, switch around the electrodes into an appropriate state. The above configuration prevents an inverse voltage or overvoltage from being applied to a circuit.

In particular, if, for instance, the sensor device D1 is designed such that the battery cells 6 need to be replaced individually on site, replacing two or more battery cells 6 takes a long time, increasing the risk of connecting a battery cell 6 incorrectly such that the positive and negative electrodes are reversed. Shortening the time for replacing battery cells 6 helps maintain a worker's concentration during the replacement and prevents incorrect connection. Simplifying the replacement of battery cells 6 shortens the replacement time and the time during which no power is supplied to the sensor circuit 2 and the wireless circuit 3.

### (2) Second Technical Feature and Effects

The body M1 faces the gauge G1 as it is attached thereto. The sensor section 21 is separated from the gauge G1 by the bottom 112 alone when the sensor section 21 obtains a measurement from the gauge G1. This reduces the risk of the sensor section 21 failing to obtain a measurement.

If the sensor section 21 includes a magnetic sensor IC configured to detect the position of the needle G14 of the gauge G1 contactlessly, placing the sensor section 21 away from the battery cells 6 prevents the sensor section 21 from being easily affected by the battery cells 6 in obtaining a measurement. If, for instance, the sensor section 21 is affected by the battery cells 6 in obtaining a measurement, the sensor device D1 may be provided with, for example, an electromagnetic wave absorbing sheet between the sensor section 21 and the battery cells 6.

### (3) Third Technical Feature and Effects

The sensor device D1 includes an O ring O disposed at the boundary between the body casing 1 and the battery casing 5 and rendering the body container space 111, which are closed by the body casing 1 and the battery casing 5, structurally dust-tight and water-proof. This prevents the sensor section 21, which is in the body container space 111, from having a sensor function limited due to adherence of water droplets, dust, or the like.

Fitting the lid 9 with the battery casing 5 with the sheet S in-between structurally prevents liquids such as water and oil from entering the internal holder containing space 511 or the battery substrate containing space 521. With this configuration, the O ring O renders not only the body container space 111 but also the internal holder containing space 511 and the battery substrate containing space 521 liquid-tight. This prevents water droplets from corroding the battery cells 6 or the battery substrate 8 or a short circuit or the like from breaking the battery unit B1.

### (4) Fourth Technical Feature and Effects

The battery cells 6 are held by the internal holder 7, which includes separator sections 72 each made of an insulating material and disposed between two mutually adjacent battery cells 6 in the battery casing 5. This allows the battery cells 6 to be in position in the internal holder 7 and easily connected to the battery substrate 8.

The battery cells 6 may each individually meet explosion-proof specifications. If, however, the battery cells 6 are not arranged such that two mutually adjacent ones have either respective positive electrodes facing each other or respective negative electrodes facing each other, and are connected to one another in parallel by the battery substrate 8, such two mutually adjacent battery cells 6 have mutually facing electrodes with an electric potential difference therebetween, with the result of the risk of electric discharge and the battery unit B1 failing to meet explosion-proof specifications. If the battery cells 6 are arranged such that two mutually adjacent ones have either respective positive electrodes facing each other or respective negative electrodes facing each other, and are connected to one another in series by the battery substrate 8, such two mutually adjacent battery cells 6 have mutually facing electrodes with an electric potential difference therebetween, with the result of the risk of electric discharge and the battery unit B1 failing to meet explosion-proof specifications. In either of the above cases, two mutually adjacent battery cells 6 are separated from each other by a separator section 72. If, for instance, the battery cells 6 are connected in series with an electric potential difference between mutually facing electrodes, using separator sections 72 coinciding with each battery cell 6 in its entirety as viewed along the axis Z increases the spacial distance between the mutually facing electrodes, reducing electric discharge caused by the electric potential difference.

### (5) Fifth Technical Feature and Effects

The battery cells 6 are arranged such that two mutually adjacent ones have either respective positive electrodes facing each other or respective negative electrodes facing each other, that is, have respective electrodes identical to each other. If, for instance, two mutually adjacent battery cells 6 are electrically connected to each other in parallel, the above configuration reduces the risk of electric discharge caused by an electric potential difference between the mutually facing electrodes. In addition, the above configuration allows tabs 61 to be welded or otherwise connected to the respective positive and negative electrodes of each battery cell 6 and be positioned off the center of each electrode such that the tabs 61 are positioned differently as viewed along the axis Z from other tabs 61 connected to the positive and negative electrodes of two mutually adjacent battery cells 6. With this configuration, the battery substrate 8 has a first face 81 with a surface electrode (land) for electric connection of the tabs 61 which surface electrode is positioned differently along the axis Z from respective surface electrodes (lands) for electric connection of the tabs 61 of the two mutually adjacent battery cells 6. This increases the creepage distance between the surface electrodes (lands) and thereby reduces the risk of electric discharge caused by an electric potential difference on the battery substrate 8. The battery substrate 8 may be provided with through-hole electrodes extending from the first face 81 to the second face 82.

### (6) Sixth Technical Feature and Effects

The battery cells 6 are stacked on top of one another such that their respective axes extend in parallel to the axis of the shaft G17. The battery substrate 8 has faces each extending in the direction in which the battery cells 6 are stacked. The battery cells 6 are each provided with respective tabs extending from the positive and negative electrodes and are electrically connected to the battery substrate 8 through the tabs 61. This configuration allows the battery cells 6 to be arranged such that their combined dimension along the axis Z is at its minimum and be electrically connected to a single battery substrate 8.

The battery substrate 8 may have a dimension along the axis Z which dimension is equal to or slightly larger than the combined dimension of the battery cells 6 along the axis Z. This allows the battery unit B1 to have a small dimension along the axis Z, that is, allows the sensor device D1 as attached to the gauge G1 to have a small dimension extending from the attachment surface of the gauge G1 along the axis Z.

If the battery substrate 8 had a dimension along the axis Z which dimension is smaller than the combined dimension of the battery cells 6 along the axis Z, there would be a difference between (i) the distance from the battery substrate 8 to the positive and negative electrodes of a battery cell 6 disposed in a space extending along the axis Z between the first and second ends 83 and 84 of the battery substrate 8 and (ii) the distance from the battery substrate 8 to the electrodes of a battery cell 6 disposed in the first axial direction Z1 of the first end 83 of the battery substrate 8 along the axis Z or in the second axial direction Z2 of the second end 84 of the battery substrate 8 along the axis Z. This would require the tabs 61 to be connected to the positive and negative electrodes of each battery cell 6 in different forms depending on the distance from the battery substrate 8 to the positive and negative electrodes of the battery cell 6. This would in turn require a worker to take the trouble of checking how the tabs 61 are connected to the positive and negative electrodes of the battery cell 6 in containing the battery cell 6 into the battery container 71 of the internal holder 7. The worker would, in such cases, be unable to connect the tabs 61 to the battery substrate 8 if the worker contains battery cells 6 in the battery container 71 in an incorrect order. The above configuration prevents such inconvenience.

### (7) Seventh Technical Feature and Effects

The body casing 1 as attached to the gauge G1 has an outer shape identical to that of the battery casing 5 as viewed along the axis Z, that is, the axis of the shaft G17. The battery casing 5 includes a barrel-shaped container 51 configured to contain the battery cells 6 and having a size minimally required to contain the internal holder 7 and a substrate container 52 having a size minimally required to contain the battery substrate 8 and a portion of the internal holder 7. This allows the sensor device D1 as attached to the gauge G1 to have a projection area along the axis Z which projection area is slightly larger than the outer size of each battery cell 6.

If, for instance, the coin-type battery cells 6 are of general-purpose CR2032 type, the battery casing 5 may include a barrel 11 with a diameter of approximately not more than 30 mm. If the gauge G1 is, for example, a pressure gauge including a needle G14 configured to coincide with a scale mark G161 to provide a measurement, and the sensor device D1 is attached to the gauge G1 to obtain a measurement therefrom, the sensor device D1 is more visible with a smaller projection area along the axis Z, as a person may need to see the scale mark G161 with which the needle G14 coincides to, for instance, check whether the sensor device D1 is normally obtaining measurements or see a measurement while working near the gauge G1.

If the coin-type battery cells are of general-purpose CR2032 type, the battery casing 5 has a large projection area along the axis Z. Using larger battery cells 6 for a longer life or the like requires only the barrel-shaped container 51 to be larger, allowing both the body M1 and that portion of the battery unit B1 which comes into contact with the body M1 to be sized for the case involving use of CR2032 type battery cells. This allows an old battery unit B1 to be replaced with a new battery unit B1 containing differently sized battery cells while the body M1 remains attached. With the sensor device D1 configured as above, the body M1, which remains attached, hides an equal area of that surface of the gauge G1 to which the sensor device D1 is attached even if the battery unit B1 protrudes from the attachment surface further than the heightwise end of the body M1 in the second axial direction Z2 along the axis Z. This means that using larger battery cells 6 does not prevent a person from seeing the scale mark G161 with which the needle G14 coincides.

### (8) Eighth Technical Feature and Effects

The battery unit B1 is attachable to and detachable from the body M1 as a result of pressing the battery casing 5 against the body casing 1, keeping the press, and rotating the battery casing 5 about a rotation axis parallel to the press direction. With this configuration, for instance, rotating the battery casing 5 as attached to the body casing 1 counterclockwise by a predetermined angle about the axis of the barrel-shaped container 51 of the battery casing 5 detaches the battery casing 5 from the body casing 1. Rotating the battery casing 5 as detached from the body casing 1 clockwise by a predetermined angle attaches the battery casing 5 to the body casing 1. The attachment involves no fixing member such as a screw, which allows the battery cells 6 to be replaced rapidly in a simple manner.

### (9) Ninth Technical Feature and Effects

The sensor circuit 2 includes a sensor section 21 and a sensor controller 22. The sensor section 21 obtains positional information indicative of the position of the needle G14. With the sensor device D1 attached to the gauge G1, the sensor section 21 faces the bottom 112 of the body casing 1 and coincides with the shaft G17 as viewed along the axis Z, that is, along the axis of the shaft G17. With this configuration, if, for instance, the gauge G1 includes a magnet G18 rotatable together with the needle G14, the sensor section 21 detects a change caused in the magnetic field by the rotation of the magnet G18, whereas the sensor controller 22 converts the output of the sensor section 21 into information on the position of the needle G14. This allows the sensor device D1 to detect the position of the needle G14.

### (10) Tenth Technical Feature and Effects

The sensor device D1 further includes a wireless circuit 3 including an antenna 31 configured to transmit information on the position of the needle G14 to a receiver. With the sensor device D1 attached to the gauge G1, the antenna 31 does not coincide with the shaft G17 as viewed along the axis Z. This configuration allows positional information that the sensor section 21 has obtained to be transmitted wirelessly through the antenna 31 to a receiver away from the gauge G1, allowing a person to check the detection result from the gauge G1 in a place away (far) from the gauge G1. Providing two or more gauges G1 for equipment in a factory to measure pressure at different positions eliminates the need for an inspector to visually check all pressure gauges as an inspection at the start of the factory to learn whether the equipment is in operation at normal pressure. This configuration, which allows an inspector in an office to check detection information from all pressure gauges, shortens the time for an inspection before the start. While visual check inevitably entails unreliable detection results, the above configuration involves detection by a sensor and hence less unreliability in the detection results. Constructing a system for automatically storing the detection results allows day-to-day detection results to be recorded as data, which is in turn usable in, for example, determining the time period of the operation of the factory or issuing an alert to indicate when to replace a component.

### (11) Eleventh Technical Feature and Effects

The locking sections 513 are structurally (i) locked in the respective lock sections 113 when the sensor device D1 is in the active state to prevent the battery casing 5 from being moved in the second axial direction Z2 relative to the battery casing 5 and (ii) unlocked from the respective lock sections 113 when the sensor device D1 is in the inactive state to allow the body casing 1 and the battery casing 5 to be moved in the second axial direction Z2. With the sensor device D1 in the active state, the O ring O is elastically deformed to apply force as the locking sections 513 are locked in the respective lock sections 113 to prevent the battery casing 5 from being moved in the second axial direction Z2 relative to the body casing 1. This prevents the sensor device D1 from unintentionally transitioning from the active state into the inactive state, preventing the battery unit B1 from coming off the body M1. The above structure eliminates the need for a fixing member such as a screw and allows the sensor device D1 to be produced inexpensively.

### (12) Twelfth Technical Feature and Effects

With the sensor device D1 in the active state or the inactive state, the projection 522 is in the guide groove 121. The tip 522a may be in contact with the bottom face 121a while the sensor device D1 is transitioning between the active and inactive states. The bottom face 121a includes a portion facing the tip 522a while the sensor device D1 is in the active state or the inactive state which portion is in the first axial direction Z1 from a portion of the bottom face 121a which portion faces the tip 522a while the sensor device D1 is transitioning between the active and inactive states. This causes the surface of contact between the locking sections 513 and the lock sections 113 to receive a frictional force while the sensor device D1 is in the active state or the inactive state which frictional force is smaller than the frictional force received by the surface of contact between the locking sections 513 and the lock sections 113 while the sensor device D1 is transitioning between the active and inactive states. This allows a person to recognize that the sensor device D1 is in the active state or the inactive state, on the basis of how much force the person applies to rotate the battery casing 5. This in turn prevents the person from stopping rotating the battery unit B1 while the sensor device D1 is still transitioning between the active and inactive states and erroneously determining that the person has finished replacing the battery cells.

### (13) Other Technical Features and Effects

The controller may be configured to control electric power from the battery cells 6 which electric power is outputted from the battery substrate 8 through the connection member 10. The controller may be in the form of a Hall device or the like such that the battery unit B1 is configured to (i) supply electric power from the battery cells 6 through the connection member 10 to the body M1 when the sensor device D1 is in the active state and (ii) supply no electric power from the battery cells 6 when the sensor device D1 is in the inactive state or when the battery unit B1 is detached from the body M1 so that no electric potential difference is at that output end of the connection member 10 which is connected to the battery unit B1. Suppose, for instance, that the output end of the connection member 10 has an electric potential difference due to the battery cells 6 with the battery unit B1 detached from the body M1. Failing to keep an equal electric potential difference at the input end of the connection member 10 which input end is connected to the body M1 may let electric discharge be caused at the instant of electric connection. Keeping an equal electric potential difference at the input and output ends of the connection member 10 exposes the input end, which has an electric potential difference, with the battery unit B1 detached from the body M1. A worker may, for instance, touch the input end and cause a short circuit. The worker may wear a watch or work clothes with buttons; the metal parts of such a watch or buttons may come into contact with the input end and cause electric discharge or a short circuit. The above configuration prevents the sensor device D1 from being damaged due to such electric discharge or a short circuit. The controller may alternatively be an element for preventing overcurrent when electric discharge or a short circuit occurs at a portion with an electric potential difference on the battery substrate 8 or of a component electrically connected thereto. Such an element protects the battery unit B1 and avoids becoming an ignition source in an explosion-proof area in which the sensor device D1 is used.

### (14) Other Technical Features and Effects

The body casing 1 may be made of a transparent resin to allow a worker to see light from an LED on the body substrate 4 and recognize while replacing the battery cells 6 whether the body power source controller 43 is functioning to keep supplying electric power to the sensor circuit 2 and the wireless circuit 3. This informs the worker of how much time the worker is able to use to replace the battery cells 6. This in turn prevents the sensor device D1 from stopping during the replacement, which can stop the entire system, including the equipment operating in the factory.

The battery casing 5 or the lid 9 may be made of a transparent resin to allow a worker to see light from an LED on the battery substrate 8 and recognize a decrease in the electric charge, thereby informing the worker in advance of when to replace the battery cells 6. This prevents the worker from incorrectly recognizing the result of detection of the gauge G1 or being unable to recognize the detection result as the battery cells 6 are reaching the end of their life, which can stop the entire system, including the equipment operating in the factory or outdoors.

### (15) Other Technical Features and Effects

The battery unit B1 may be produced through a process that includes (i) filling the internal holder containing space 511 and the battery container 71 with a potting agent, (ii) applying a resin material such as a potting agent to a portion or the entirety of the internal holder 7, the battery cells 6, and/or the battery substrate 8, and/or (iii) overmolding a portion or the entirety of the internal holder 7, the battery cells 6, and/or the battery substrate 8. This prevents arc discharge (spark) at a portion or component that does not meet explosion-proof specifications and allows the battery unit B1 itself to meet explosion-proof specifications. This in turn allows a worker to bring the battery unit B1 alone into an explosion-proof area and replace the battery cells 6, and also allows a replacement battery unit B1 to be ready near the sensor device D1 in an explosion-proof area.

### (16) Other Technical Features and Effects

The barrel 11 of the body casing 1 and the barrel-shaped container 51 of the battery casing 5 may each include an integral marker to visually indicate whether the sensor device D1 is in the active state or the inactive state. This allows a worker to recognize that the battery unit B1 is normally attached to the body M1, and prevents the worker from rotating the battery unit B1 in the wrong direction when causing the sensor device D1 to transition from the active state into the inactive state for replacement of the battery cells 6 or from the active state into the inactive state. The marker eliminates the need for the worker to recognize the angle by which to rotate the battery unit B1 for a transition from the active state into the inactive state and allows the worker to recognize the position at which to finish the rotation. This prevents the worker from rotating the battery unit B1 insufficiently or excessively. The marker also allows the worker to, when pressing the detached battery unit B1 against the body M1 for the sensor device D1 to be in the inactive state, recognize at what angle to orient the battery unit B1 relative to the body M1 before pressing the battery unit B1 against the body M1. This prevents the worker from breaking the projection 522 of the battery casing 5.

### Industrial Applicability

The present invention is applicable to any system for remotely managing the state of the operation of a gauge in, for example, outside a plant or factory provided with equipment that requires explosion-proof specifications.

### Reference Signs List

- 1: Body casing
- 2: Sensor circuit
- 3: Wireless circuit
- 5: Battery casing
- 6: Battery cell
- 7: Holder (internal holder)
- 8: Battery substrate
- 21: Sensor section
- 22: Sensor controller
- 31: Antenna
- 51: Barrel-shaped container
- 52: Substrate container
- 61: Tab (extension terminal)
- 72: Separator section
- B1: Battery unit
- D1: Sensor device
- G1: Gauge
- G14: Needle
- G16: Dial plate
- G17: Shaft
- G161: Scale mark
- M1: Body
- O: O ring (sealer)

## Claims

1. A sensor device attachable for use to a gauge and configured to obtain a measurement from the gauge contactlessly, the gauge including: a dial plate provided with a scale mark; a needle rotatable over the dial plate; and a shaft configured to rotate the needle,
the sensor device comprising:
a body; and
a battery unit,
the body including a body casing containing a sensor circuit configured to obtain the measurement,
the battery unit including a battery casing containing at least one battery cell configured to supply electric power to the sensor circuit,
the body and the battery unit being configured to be assembled to each other as a result of the body casing and the battery casing being stacked on top of each other.

2. The sensor device according to claim 1, wherein
the body faces the gauge with the sensor device attached to the gauge.

3. The sensor device according to claim 1 or 2, further comprising:
a sealer at a boundary between the body casing and the battery casing.

4. The sensor device according to claim 1 or 2, wherein
the at least one battery cell includes a plurality of battery cells, and
the sensor device further comprises:
a holder holding the plurality of battery cells and including a separator section that is made of an insulating material and that is disposed between two mutually adjacent battery cells among the plurality of battery cells in the battery casing; and
a battery substrate contained in the battery casing together with the holder and electrically connected to the plurality of battery cells.

5. The sensor device according to claim 4, wherein
the plurality of battery cells are coin-type battery cells stacked on top of each other such that two mutually adjacent battery cells among the plurality of battery cells have either respective positive electrodes facing each other or respective negative electrodes facing each other.

6. The sensor device according to claim 5, wherein
the plurality of battery cells each have an axis parallel to an axis of the shaft,
the battery substrate has a face extending in a direction in which the plurality of battery cells are stacked on top of each other, and
the plurality of battery cells are electrically connected to the battery substrate through extension terminals extending from the positive electrode and negative electrode of each of the plurality of battery cells.

7. The sensor device according to claim 4, wherein
the battery casing includes:
a barrel-shaped container containing the plurality of battery cells; and
a substrate container protruding radially outward from the barrel-shaped container and containing the battery substrate, and
with the sensor device attached to the gauge, the body casing has an outer shape identical to an outer shape of the battery casing as viewed along an axis of the shaft.

8. The sensor device according to claim 1 or 2, wherein
the body and the battery unit are attachable to and detachable from each other as a result of pressing the battery casing against the body casing in a press direction, holding the battery casing as pressed, and rotating the battery casing about a rotation axis parallel to the press direction.

9. The sensor device according to claim 1 or 2, wherein
the sensor circuit includes:
a sensor section configured to obtain positional information indicative of a position of the needle; and
a sensor controller, and
with the sensor device attached to the gauge, the sensor section faces a bottom of the body casing and coincides with the shaft as viewed along an axis of the shaft.

10. The sensor device according to claim 9, further comprising:
a wireless circuit including an antenna configured to transmit the positional information to a receiver, wherein
with the sensor device attached to the gauge, the antenna does not coincide with the shaft as viewed along the axis of the shaft.
